# EUROPEAN PATENT APPLICATION

(11) **EP 3 544 387 A1**
(43) Date of publication of application: **25.09.2019**
(21) Application number: 17871916.7
(22) Date of filing: 24.07.2017
(51) Int. Cl.: H05B 37/02

(54) **DYNAMIC LIGHTING METHOD AND APPARATUS**

(30) Priority: 18.11.2016 CN 201611020316; 18.11.2016 CN 201611031617; 18.11.2016 CN 201611026244; 18.11.2016 CN 201611019347
(71) Applicant: Guangdong Wlight Visual Health Research Institute, Guangzhou, Guangdong 510150 (CN)
(72) Inventor: CHEN, Ziping, Guangzhou Guangdong 510150 (CN); CHEN, Mengzhen, Guangzhou Guangdong 510150 (CN); HUANG, Lei, Guangzhou Guangdong 510150 (CN)
(74) Representative: Glück Kritzenberger Patentanwälte PartGmbB
(86) International application number: PCT/CN2017/094111
(87) International publication number: WO 2018/090660

(57) **Abstract**

Disclosed is a dynamic lighting method and apparatus, wherein one or more electrical parameter changing time period is configured during lighting and it includes Step1: a power output starting electrical parameter and a power output ending electrical parameter are available in each electrical parameter changing time period, wherein electrical parameters output by a power supply part change with a same trend from the power output starting electrical parameter to the power output ending electrical parameter, a starting point electrical parameter and an ending point electrical parameter within an electrical parameter changing time period is respectively equal to electrical parameters in an electrical parameter non-changing time period which is before and after the electrical parameter changing time period,Step2: enabling a dynamic lighting part to change lighting parameters during the electrical parameter changing time period according to step1, such that the change of the lighting parameters causes the eye structure of the user be dynamically changed. The dynamic lighting method actively trains the physiological structure of the eyes of the users so as to effectively maintain the vision of the users, without influence to the eye-use habits , sitting posture and the working pace of the user.

## Description

This application claims priorities from Chinese Patent Application of No.201611020316.2, entitled Dynamic Lighting Method, No.201611031617.5, entitled Dynamic Lighting Method, No. 201611026244.2, entitled Dynamic Lighting Method, No. 201611019347.6, and entitled Dynamic Lighting Method, filed on November 18, 2016, in National Intellectual Property Administration, PRC.

### FIELD OF THE INVENTION

The present invention relates to a technical field of lighting, in particular to a dynamic lighting method and apparatus, which is particularly suitable for being used in some occasions where vision care and vision training are expected, such as work environments and at-home lighting environments and so on.

### BACKGROUND OF THE INVENTION

Vision health has been a common concerned important problem to all people. According to the study of The Report of Vision Health of Chinese reported by the Center of Health Development Research in China, of Peking university, reported on June, 2015, the people over 5 years old who are of myopia and hyperopia are mostly students and office workers in China, in 2012. The number of people of myopia or hyperopia is about 500 million, and the number of people of myopia is about 450 million. The students bear a high pressure of study, there is too much homework for students, they need to spend long time reading and doing homework under light at night, however the hygiene of the eyes isn't assured, and it may undeniably cause a chronic fatigue of eyes. Additionally, besides students, office workers and other people spend long time reading and working under light. There is no proper rest and adjustment for the eyes, what's more, the unscientific lighting causes the eyes to feel dry and tired, and causes the dizziness, headache, even nausea, nervous, tachycardia, and they suffer from fatigue syndrome of light unconsciously. And the improper lighting may cause some eye damages and diseases including cataracts caused by light, retinitis caused by light, keratitis caused by light, myopia, dysfunction of brain and eye, vision glare fatigue and so on.

In existing technology, there are two means for lighting used by lighting apparatus in case where vision care and vision training are expected. The two means basically include an independent lighting method and an auxiliary lighting method. The independent lighting method realizes lighting with effect of vision care through selecting the parameters of light source of the lighting apparatus itself. The auxiliary lighting method realizes lighting with effect of vision care based on the participation of ambient light or natural light.

Additionally, in existing technology, there are also some methods that when lighting, users are intermittently reminded to rest and correct sitting posture. However, the users cultivate eye-use habit only through these methods, these methods also may not restore and improve the vision. If the users cannot change their habits of reading and working for meeting the designer's original intention, for example, they need to intermittently watch other places or images, or reading and writing postures. and these methods probably may not further achieve the expected effect of preventing vision down because they interfere with the users' normal habits, and also fail to maintain vision of the users effectively.

Accordingly, there are some defects in the existing technology which include because of the environment where the users spend long time on reading and doing homework or the environment where the lighting parameters are unscientific, the users' eyes are not able to restore, and the ciliary muscle, pupil and/or lens are in a tense state over a long period of time. And since their shape, size and other structure are fixed, it even results in that the lens and pupil are compressed for many times for a long period of time.

### SUMMERY OF THE INVENTION

Due to the above-mentioned defects of the existing technology, the present invention provides a dynamic lighting method and a dynamic lighting apparatus, which are particularly adaptable for reading and writing, and lighting at home.

The present invention is to provide a dynamic lighting method, which actively trains the physiological structure of the eyes of the users so as to effectively maintain the vision of the users, without influence to the eye habits, sitting posture and the working pace of the user.

The present invention is realized by the following technical means:
On one aspect, the present invention provides a dynamic lighting method, wherein one or more electrical parameter changing time period is configured during lighting, and the method comprises:
Step1: a power output starting electrical parameter and a power output ending electrical parameter are available in each electrical parameter changing time period, wherein electrical parameters output by a power supply part change with a same trend from the power output starting electrical parameter to the power output ending electrical parameter, and a starting point electrical parameter and an ending point electrical parameter within an electrical parameter changing time period is respectively equal to the electrical parameters output by a power supply part in an electrical parameter non-changing time period which is before and after the electrical parameter changing time period,
Step2: enabling a dynamic lighting part to change lighting parameters during the electrical parameter changing time period according to step1, such that the change of the lighting parameters causes the eye structure of a user to be dynamically changed.

Further, a time length of each electrical parameter changing time period is equal to or different from each other.

Further, the electrical parameters include a current and/or a voltage.

Further, the lighting parameter is an illumination.

Further, the value of the illumination is between 100 lux and 10000 lux.

Further, a change rate of the lighting parameters of the illumination in the electrical parameter changing time period ranges from 0.0001 to 0.02 in every 0.1 second.

Further, a change rate of the illumination in the electrical parameter changing time period is larger than or equal to 2.

Further, the lighting parameters are adjusted manually during dynamic lighting.

On second aspect, the present invention provides a dynamic lighting method, wherein multiple electrical parameter changing time periods and one or more electrical parameter non-changing period are configured during lighting, and the method comprises:
Step1: a power output starting electrical parameter and a power output ending electrical parameter are available in each electrical parameter changing time period, electrical parameters output by a power supply part changes with a same trend from the power output starting electrical parameter to the power output ending electrical parameter, and the electrical parameters changes with a same trend or different trend between adjacent electrical parameter changing time periods,
Step2: enabling a dynamic lighting part to change lighting parameters according to step1, such that the change of the lighting parameters in each electrical parameter changing time period causes the eye structure of a user to be dynamically changed.

Further, a time length of each electrical parameter changing time period is equal to or different from each other.

Further, the electrical parameters include a current and/or a voltage.

Further, the lighting parameter is an illumination.

Further, a value of the illumination is between 100 lux and 10000 lux.

Further, a change rate of the lighting parameter of the illumination in the electrical parameter changing time period ranges from 0.0001 to 0.02 in every 0.1 second.

Further, a change rate of the illumination in the electrical parameter changing time period is larger than or equal to 2.

Further, the lighting parameters are adjusted manually during dynamic lighting.

On third aspect, the present invention provides a dynamic lighting method, wherein multiple electrical parameter configuring time periods are configured during lighting, and the method comprises:
Step1: different electrical parameters output by a power supply part are respectively configured in two adjacent electrical parameter configuring time periods,
Step2: enabling a dynamic lighting part to change lighting parameters dynamically according to the electrical parameters of step1, such that the change of the lighting parameters causes the eye structure of a user to be dynamically changed.

Further, a time length of each electrical parameter configuring time period is equal to or different from each other.

Further, the electrical parameters include a current and/or a voltage.

Further, the lighting parameter is an illumination.

Further, a value of the illumination is between 100 lux and 10000 lux.

Further, a change rate of the illumination between the adjacent electrical parameter configuring time periods is ranged within 0.02.

Further, the lighting parameters are adjusted manually during dynamic lighting.

On fourth aspect, the present invention provides a dynamic lighting method, wherein multiple electrical parameter changing time periods are configured during lighting, and the method comprises:
Step1: a power output starting electrical parameter and a power output ending electrical parameter are available in each electrical parameter changing time period, electrical parameters output by a power supply part change with a same trend from the power output starting electrical parameter to the power output ending electrical parameter, and the electrical parameters change with a same trend or a different trend between adjacent electrical parameter changing time periods,
Step2: enabling a dynamic lighting part to change lighting parameters according to step1, such that the change of the lighting parameters in each electrical parameter changing time period causes the eye structure of a user to be dynamically changed

Further, a time length of each electrical parameter changing time period is equal to or different from each other.

Further, the electrical parameters include a current and/or a voltage.

Further, the lighting parameter is an illumination.

Further, a value of the illumination is between 100 lux and 10000 lux.

Further, a change rate of the lighting parameter of the illumination in the electrical parameter changing time period ranges from 0.0001 to 0.02 in every 0.1 second.

Further, a change rate of the illumination in the electrical parameter changing time period is larger than or equal to 2.

Further, the lighting parameters are adjusted manually during dynamic lighting.

On fifth aspect, the present invention provides a dynamic lighting apparatus, the dynamic lighting apparatus performs lighting by any one of abovementioned dynamic lighting methods.

The effects obtained by the present invention includes lighting parameters will be changed with the change of the electric parameters, and the structure of the eyes of the user would be dynamically changed as to the vibration of the light. The change of the structure of eyes includes linkage movement of the iris, ciliary muscle and lens. The linkage movement of the iris, the ciliary muscle and the lens causes the physiological structure of the eye to move continuously. The shapes and/or sizes of the iris, ciliary muscle and lens automatically change continuously, and it causes the iris, ciliary muscle and lens of the eye not to be easily solidified in a certain state or even the deterioration of vision occurs, the optometry system is kept active, and the occurrence of myopia, hyperopia and other issues is fundamentally controlled. At the same time, the continuous change of the lighting light which affects the eye may also cause the eyes to be adaptable to day and night, and exercise the eyes to avoid the occurrence of amblyopia.

### BRIEF DESCRIPTION OF THE DRAWINGS

FIG. 1 shows a block diagram of electrical component of a dynamic lighting apparatus according to an embodiment of the present invention.
FIG.2 shows a block diagram of electrical component of a dynamic lighting apparatus according to another embodiment of the present invention.
FIG.3 shows a block diagram of electrical component of a dynamic lighting apparatus according to another embodiment of the present invention.
FIG.4 shows a diagram of the circuit structure of a power supply part according to some embodiments of the present invention.
FIG.5 shows a LED driving circuit of a dynamic lighting apparatus according to an embodiment of the present invention.
FIG.6 shows a controlling circuit of a dynamic lighting apparatus according to an embodiment of the present invention.
FIG.7 shows a USB current limiting circuit of a dynamic lighting apparatus according to an embodiment of the present invention.
FIG.8 shows a power supply circuit of a dynamic lighting apparatus according to an embodiment of the present invention.
FIG.9 shows a voltage converting circuit of a dynamic lighting apparatus according to an embodiment of the present invention.
FIG. 10 shows a circuit of a network interface of a dynamic lighting apparatus according to an embodiment of the present invention.
FIG. 11 shows a circuit of the touch keys of a dynamic lighting apparatus according to an embodiment of the present invention.
FIG. 12 shows a chord output circuit of a dynamic lighting apparatus according to an embodiment of the present invention.
FIG. 13 shows an environment temperature collecting circuit of a dynamic lighting according to an embodiment of the present invention.
FIG. 14 shows an input voltage detecting circuit of a dynamic lighting apparatus according to an embodiment of the present invention.
FIG. 15 shows a waveform diagram of the electrical parameter changing with time according to an embodiment of the present invention.
FIG. 16 shows a waveform diagram of the electrical parameter changing with time according to an embodiment of the present invention.
FIG. 17 shows a waveform diagram of the electrical parameter changing with time according to an embodiment of the present invention.
FIG. 18a shows an illustrated waveform diagram of the electrical parameter changing with time according to the embodiment of the present invention.
FIG.18b shows another illustrated waveform diagram of the electrical parameter changing with time according to the embodiment of the present invention.

### DETAILED DESCRIPTION OF THE INVENTION

The technical solutions of this present invention will be described further in detail through the attached drawings and embodiments.

The following describes the specific embodiments incorporating the attached drawings of the description in detail. In the invention, 'eye structure' of the user includes at least one of pupil, ciliary muscle and lens. In the present invention, the term 'electric power' includes a direct current and/or an alternating current. In the present invention, 'period' refers to one period of time or multiple periods of time, and 'period' in the present invention intends to include the one or multiple periods of time which has the following characteristics within the scope of the protection: the length of each period of time can be the same or different, the respective length of the multiple periods of time can change regularly or not, and the electrical parameters of the electric power in multiple periods of time can change regularly or irregularly.

The disclosed dynamic lighting method includes several different technical implementation solutions, and which will be explained below one by one.

In the first technical solution, one or more electrical parameter changing time period is configured during the lighting phase by the dynamic lighting method and which includes the following steps:
Step1:a power output starting electrical parameter and a power output ending electrical parameter are available in each electrical parameter changing time period, electrical parameters output by a power supply part change with a same trend from the power output starting electrical parameter to the power output ending electrical parameter, a starting point electrical parameter and an ending point electrical parameter within an electrical parameter changing time period is respectively equal to electrical parameters within an electrical parameter non-changing time period which is before and after the electrical parameter changing time period. And
Step2: enabling a dynamic lighting part to change lighting parameters during the electrical parameter changing time period according to step1, such that the change of the lighting parameters causes the eye structure of the user to be dynamically changed.

The change of the lighting parameters caused by that of the electrical parameters in the electrical parameter changing time period will not have a negative effect on visual sense, which the user will notice and then will interfere normal use.

According to some embodiments of the invention, enabling each dynamic lighting part to change lighting parameters includes: during the electrical parameter changing time period, the lighting parameters of each dynamic lighting part will be changed, thereby it will further result in more changes of the eye structure of the user and more training is obtained. Moreover, the change results in the situation where large change or fluctuation of lighting parameters appears between different electrical parameter changing time periods is greatly reduced, therefore it is beneficial for users in the lighting environment without subjective awareness of the change of lighting parameters. More advantageously, the present invention can provide more detailed structural change for the eyes of the user, therefore it becomes possible to make appropriate and desired fine tuning on the eye structure of the user.

According to some embodiments of the invention, the method further includes the step of storing the information characterizing the changing manner for the electrical parameters, and/or the step of configuring and counting the change frequency of electrical parameters.

The following illustrates non-limiting examples of implementing the dynamic lighting method of the invention incorporating the structure of the dynamic lighting apparatus which including power supply parts and dynamic lighting parts. Each power supply part may control only one dynamic lighting part, or may control multiple dynamic lighting parts. The dynamic lighting apparatus may include multiple power supply parts and multiple dynamic lighting parts.

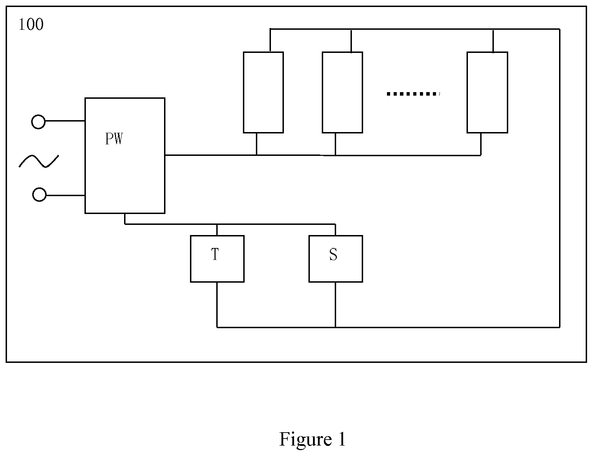

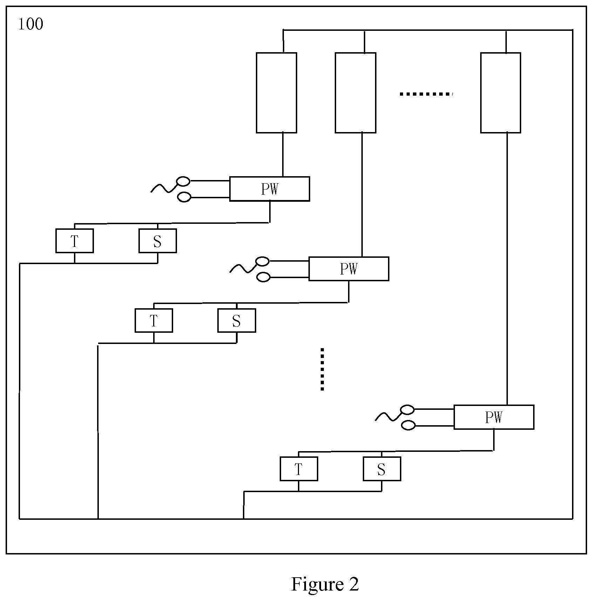

FIG.1 is a schematic block diagram of electrical components of the dynamic lighting apparatus 100 of the present invention. The dynamic lighting apparatus 100 includes a power supply part (PW) and multiple dynamic lighting parts 1, 2,..., N, 'N' is a natural number greater than 1. The power supply part (PW) provides a power for multiple dynamic lighting parts 1, 2,..., N. For clarity, switches and other parts which those of skill in the art should understand a lighting apparatus must have are not shown in FIG.2. According to preferred embodiments of the invention, the switches are configured in the power supply parts (PW), and control whether or not to provide the power for multiple dynamic lighting parts 1, 2,..., N, that is, the switches control the whole dynamic lighting apparatus 100 to work or not. According to preferred embodiments of the invention, the dynamic lighting parts 1, 2,..., N belong to light-emitting diode (LED) lighting apparatuses.

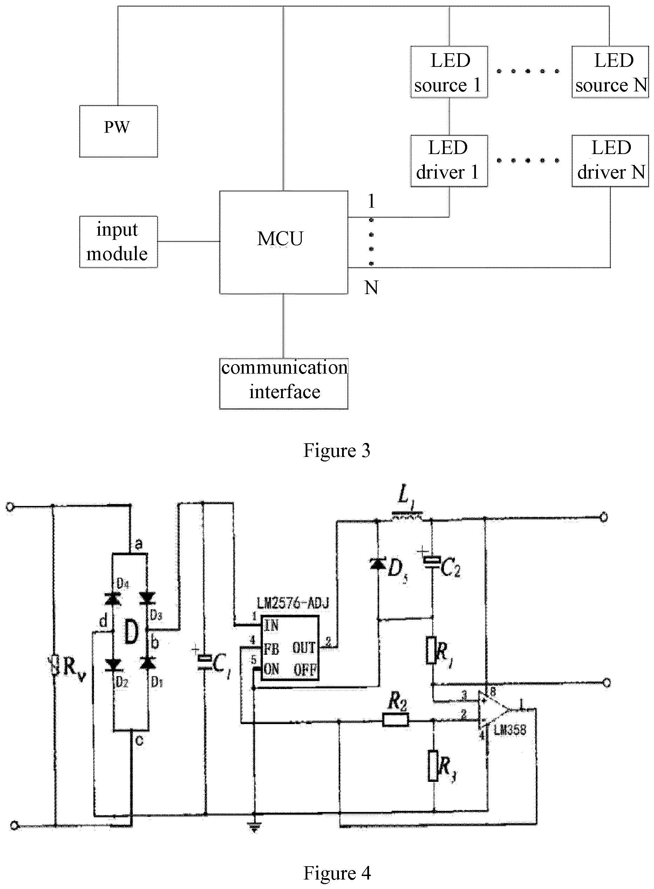

The electrical parameters of the power output by power supply parts (PW) change in a predetermined manner according to the present invention. The predetermined manner could be a preset data table stored in a power supply part(s) (PW) or other parts. The data table includes multiple groups of electrical parameters. In some embodiments, these electrical parameters may be generated by being written to a storage before the shipment. In other embodiments, these electrical parameters may be generated or rewritten through external interfaces (e.g. a USB interface, a network interface, etc.) of the dynamic lighting apparatus. These electrical parameters include, but are not limited to, the voltage and/or current. For brevity, the present invention will describe the voltage as the parameter, the circuit structure of the power supply part is shown in Fig. 4, and its detailed description will be described later. This kind of power supply manner eliminates the disadvantages that stroboscopic phenomenon usually appears when using LED for lighting, thereby it provides electrical protection for the quality of the light entering the eye.

When the voltage outputted by a power supply part (PW) is changed by a predetermined manner, the voltage as the electrical parameter outputted to each dynamic lighting part 1, 2,..., N will be changed. The voltage is used as a lighting voltage of the dynamic lighting parts 1, 2,..., N. As the lighting voltage changes, the lighting parameters of dynamic lighting parts 1, 2,..., N will be changed accordingly.

In this present invention, the lighting model parameters include at least one of the illumination, luminous intensity, luminous flux, change frequency, height, inclination angle and rotation angle of each dynamic lighting part. In other words, when the lighting parameters change, the corresponding parameters of the light entering the eyes of the user will change accordingly. The change of the light causes the eye structure of the user to be changed dynamically.

When one or more lighting parameters such as illumination, luminous intensity, luminous flux, and angle changes, in order to adapt to the changes of these lighting parameters, the iris of the user's eye will adjust the pupil size automatically under the precondition that the user is unconscious of that, thus the luminous flux will be controlled. In this way, the iris moves with the constant change of the lighting light. The movement of the iris will lead to the movement of the ciliary muscle, the movement of the ciliary muscle will lead to the movement of the lens, and then will result in the so-called 'three linkage of eye optometry system' in the visual field. The linkage movement of the iris, the ciliary muscle and the lens causes the physiological structure of the eye to move continuously, and the shapes and/or sizes of the iris, ciliary muscle and lens automatically change continuously, therefore the iris, ciliary muscle and lens of the eye are not easily solidified in a certain state or even the deterioration of vision occurs, the optometry system keeps active. The user's eye can adjust its diopter according to the distance between the eye and object to ensure that the users watch object clearly and brightly, and it is achieved the goal the user's eyes are exercised and the occurrence of myopia, hyperopia and other issues is fundamentally controlled. At the same time, the continuous change of the lighting light which affects the eye can also cause the eyes to be adaptable in day or night, and exercise the eye to avoid the occurrence of amblyopia.

According to some embodiments of the present invention, the dynamic lighting apparatus 100 further includes a storage S. The storage S may be any storage medium which includes, but is not limited to, a flash memory, a read-only memory (ROM) or any other type of solid non-volatile semiconductor memory. Lighting model parameters respectively corresponding to each dynamic lighting part 1, 2,..., N are provided in these storages S.

According to some embodiments of the present invention, these lighting model parameters, change frequency of the lighting and electrical parameters of the power all may be stored in the storage S. The electrical parameters of the power include a voltage and a current. The lighting model parameters include at least one of the illumination, luminous intensity, luminous flux, change frequency, height, inclination angle and rotation angle of each dynamic lighting part.

The manner for storing the above lighting model parameters in the storage S includes, for example, the lighting model parameters are configured in the storage S during the fabrication of the dynamic lighting apparatus 100. In other embodiments, if the dynamic lighting apparatus 100 includes an interface (e.g. a network interface, an infrared interface, a Bluetooth interface, a USB interface, etc., not shown) which is connected with the storage S and can be used to read and write the storage S, the manner for storing lighting model parameters in the storage parts further includes special person modifying, deleting, and/or updating the lighting model parameters in the storage S through the interface during the use of the dynamic lighting apparatus 100. In other embodiments, if the dynamic lighting apparatus 100 includes an interface (e.g. a network interface, an infrared interface, a Bluetooth interface, a USB interface, etc., not shown) which communicates with the storage S in a wireless or wired manner, the manner for storing lighting model parameters in the storage S further includes an update is made by the user or a remote update is made by the manufacturer of the dynamic lighting apparatus 100, who modifies, deletes, and/or updates the lighting model parameters in the storage S.

As shown in FIG.2, it is a block diagram of another kind of electrical components of the dynamic lighting apparatus 100 of the present invention. The dynamic lighting apparatus 100 includes multiple power supply parts (PW) and multiple dynamic lighting parts 1, 2,..., N, 'N' is a natural number greater than 1. The multiple power supply parts (PW) provide power for multiple dynamic lighting parts 1, 2,..., N, wherein each power supply parts (PW) can be different from each other or some of the multiple power supply parts (PW) are the same. For clarity, switches and other parts which those of skill in the art should understand a lighting apparatus must have, are not shown in FIG.3. According to preferred embodiments of the present invention, the switches are configured in each power supply part (PW), and control whether or not to provide power for multiple dynamic lighting parts 1, 2,..., N, that is, the switches control the whole dynamic lighting apparatus 100 to work or not. According to preferred embodiments of the present invention, the dynamic lighting parts 1, 2,..., N belong to light-emitting diode (LED) lighting apparatuses.

Optionally, as shown in FIG.2, according to some embodiments of the present invention, the dynamic lighting apparatus 100 further includes multiple storages S. Each storage S may be any storage medium which includes, but is not limited to, flash memory, read-only memory (ROM) or any other type of solid non-volatile semiconductor memory. Lighting model parameters respectively corresponding to the dynamic lighting parts 1, 2,..., N are provided in these storages S. The manners for storing these lighting model parameters in the storages S include, for example, the lighting model parameters are configured in the storages S during the fabrication of the dynamic lighting apparatus 100. In other embodiments, if the dynamic lighting apparatus 100 includes an interface (e.g. an infrared interface, a Bluetooth interface, a USB interface, etc., not shown) which is connected with a storage S and can be used to read and write the storage S, the manners for storing lighting model parameters in the storage S further include special person modifying, deleting, and/or updating the lighting mode parameters in the storages S through the interface during the use of the dynamic lighting apparatus 100. In other embodiments, if the dynamic lighting apparatus 100 includes an interface (e.g. a network interface, an infrared interface, a Bluetooth interface, a USB interface, etc., not shown) which communicates with a storage S in a wireless or wired manner, the manners for storing lighting model parameters in the storages S further include an update is made by the user or a remote update is made by the manufacturer of the dynamic lighting apparatus 100, who modifies, deletes, and/or updates the lighting mode parameters in the storages S.

Optionally, as shown in FIG.2, the dynamic lighting apparatus 100 further includes multiple timing parts (T), each timing part (T) corresponds to a power supply part (PW) and is used for configuring and counting change frequency of the lighting. The change frequency of the lighting is the frequency for changing the electrical parameters of the power. The timing part (T) may be any a kind of digital or analog counter or timer, the means for counting time may be done by increasing time or decreasing time. The dynamic lighting part 1, 2,..., N respectively changes lighting parameters according to at least one of the following parameters: lighting model parameters, change frequency of the lighting, electrical parameters of the power.

According to some embodiments of the present invention, the information for characterizing the predetermined manner includes a voltage, a current, change frequency of a voltage and/or a current, and/or the change step length of a voltage or a current. The driving method for the dynamic lighting part may be PWM (pulse width modulation) or other methods. The change frequency may be characterized by a time period or a frequency of change in a voltage or a current. For example, in some embodiments, multiple voltage values and time periods of changes in voltages are used to characterize the information for the predetermined manner. Here, as shown in FIG.2, the power supply parts (PW) will use counters to count during time periods of changes in voltages as counting time periods, when a final count is reached, the next value of the multiple voltage values will be used, and the multiple voltage values will be used in turn. In other embodiments of the present invention, voltage values and voltage step values are used, during each electrical parameter configuring time period, when each time a change of output voltage of power supply parts (PW) shown in FIG.2 is needed, the voltage step value is added on the voltage value which is at the end of the previous electrical parameter configuring period, these voltage values and voltage step values may be one or more (In case that there are multiple voltage values and voltage step values, voltage values may be configured by changing step length).

According to some embodiments of the present invention, the lighting parameters of each dynamic lighting part changes according to the change of electrical parameters. For example, when electrical parameters of the power are used as a basis for changing the lighting parameters, each dynamic lighting part will change the lighting parameters according to the voltage and /or the current, and /or the change frequency of a voltage and /or a current.

According to some embodiments of the present invention, the method further includes one or more lighting units are configured in each dynamic lighting part. The lighting unit of each dynamic lighting part changes the lighting parameters according to the lighting model parameters and/or electrical parameters of the power. The principle and manner of the change are same as those of each dynamic lighting part changing the lighting parameters according to the lighting model parameters and/or electrical parameters of the power, which are described above.

The electrical parameters of the power outputted by the power supply part (PW) of the present invention changes in a predetermined manner. The predetermined manner here may be a preset data table stored in the power supply part (PW) or other parts. The data table includes multiple groups of electrical parameters. In some embodiments, these electrical parameters may be generated by being written to the storage S before the shipment. In other embodiments, the dynamic lighting apparatus has external interfaces for generating or rewriting these electrical parameters, which may be generated or rewritten through external interfaces (e.g. a USB interface, a network interface, etc., not shown) of the dynamic lighting apparatus. These electrical parameters include, but are not limited to, at least one of the voltage and the current. For brief, the present invention will describe the voltage as the parameter, the circuit structure of the power supply part is shown in Fig. 4, and its detailed description will be described later. This power supply manner eliminates the disadvantages that stroboscopic phenomenon usually appears when using LED for lighting, thereby providing electrical protection for the quality of the light entering the eye.

When the voltage outputted by power supply part (PW) is changed by a predetermined manner, voltage of parameters outputted to each dynamic lighting part 1, 2,..., N will be changed. The voltage is used as lighting voltages of dynamic lighting part 1, 2,..., N. As the lighting voltage changes, the lighting parameters of the dynamic lighting parts 1, 2,..., N will change accordingly. According to other embodiments of the present invention, lighting units are configured in each dynamic lighting part. According to preferred embodiments of the present invention, these lighting units are LED beads and/or LED bars and/or other types of LED. In some other embodiments, these lighting units may also be other types of light sources other than LED, such as tungsten lamp beads, lighting apparatuses like organic light-emitting diodes(OLED), etc.

The illumination of each dynamic lighting part may reach a maximum value of 10000 lux at a certain time, and may reach a minimum value of 300 lux at another time, or may reach any interval ranged from300 lux to 10000 lux, while the illumination varies between 3000 K and 6000 K or any interval range from this scope in the present invention.

Further, during the process of the work or implementation of the dynamic lighting method, the illumination of each dynamic lighting part at any time is not lower than 300lux and not higher than 10000lux. During the change (including rising and/or failing) of the illumination, namely during once implementation process of the dynamic lighting method, the absolute value of the change rate of the rising and decreasing of the illumination is within a certain range, preferably, the absolute value of the certain range is between 1%-20% per second, namely the illumination of the lighting parameter ranges from about 1.001 to 1.02 in 0.1 second.

The fact accepted generally is that the time of persistence of vision of human eye is about 0.02 second for daytime vision, o.1 second for mesopic vision, 0.2 second for nighttime vision. The mesopic vision is a state between daytime vision and nighttime vision. The human eye sensing change in the brightness is later than the change in the actual brightness, with the persistence of vision it is referred to as visual retention. The illumination of the common lighting condition is between 300 lux and 10000 lux, which approaches to the condition of the mesopic vision. By operating a few experiments, the lighting parameter is configured to range from 1.001 to 1.02 in 0.1 second in a preferred embodiment of the present invention. In that change range, the change of the lighting parameter will not be a detectable influence on visual sense, but it will cause the iris of the user's eye to adjust the pupil size automatically under the precondition that the user is unconscious of that, thus the luminous flux may be controlled. In such way, the iris moves with the continuously change of the lighting light. The movement of the iris will lead to that of the ciliary muscle, the movement of the ciliary muscle will lead to that of the lens, and then will result in the so-called 'three linkage of eye optometry system' in the visual field, and will achieve the goal of exercising the user's eye.

Electrical parameters of the lighting parameters are determined and controlled by the lighting parameters which are needed to obtain. For example, the following table 1, 2, 3 respectively shows several groups of illumination values with different initial illuminations and different time points in case that the electrical parameter changing period is 10 seconds, 100 seconds, and 250 seconds. The table 4, 5, 6 respectively shows several groups of illumination values with different initial illuminations and different time points in case that the electrical parameter changing period is 10 seconds, 250 seconds, and 250 seconds. The change scope of the illumination values meets the requirement the lighting parameter ranges from about 1.001 to 1.02 in 0.1 second.

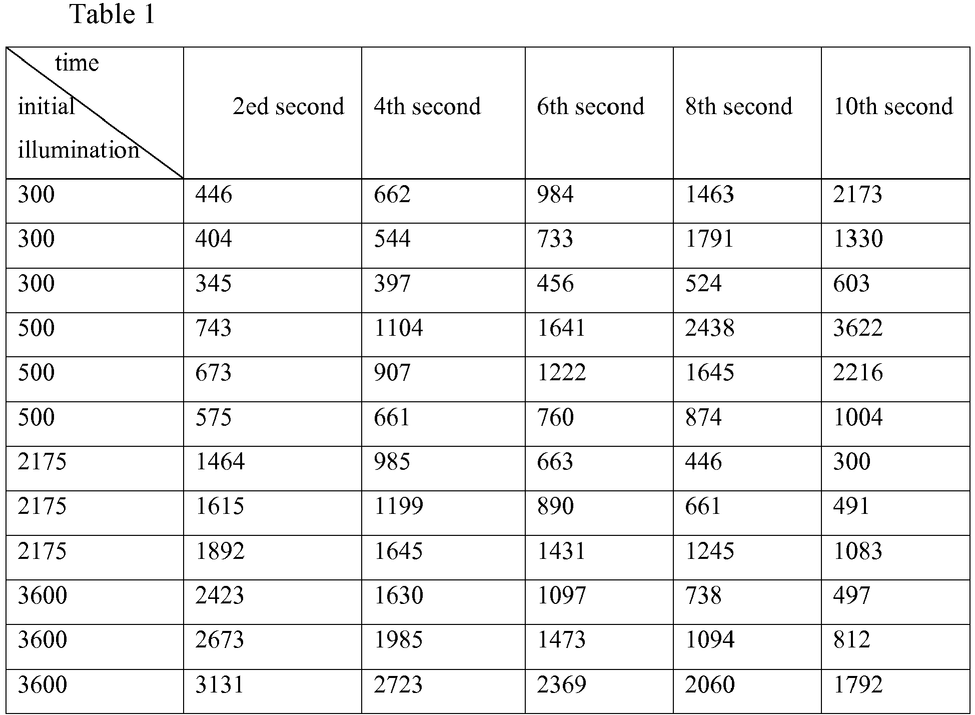

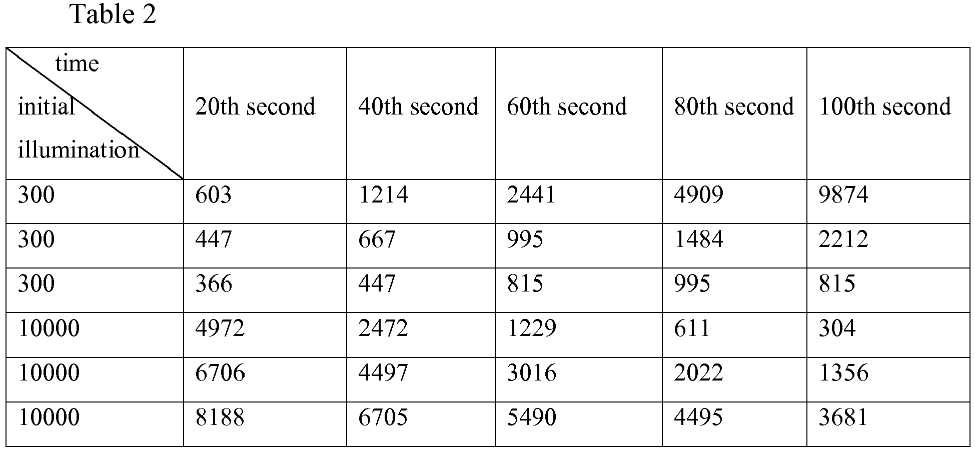

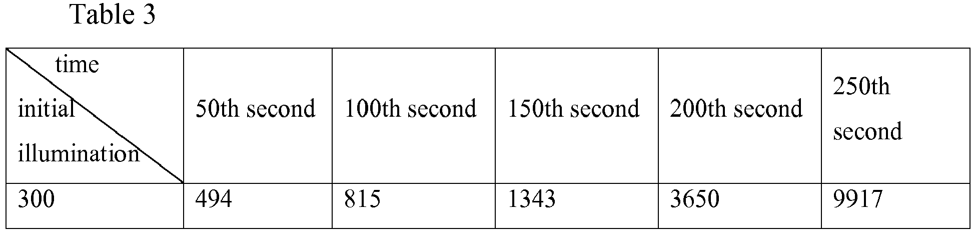

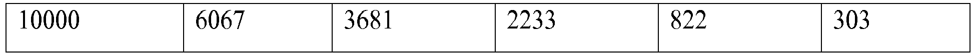

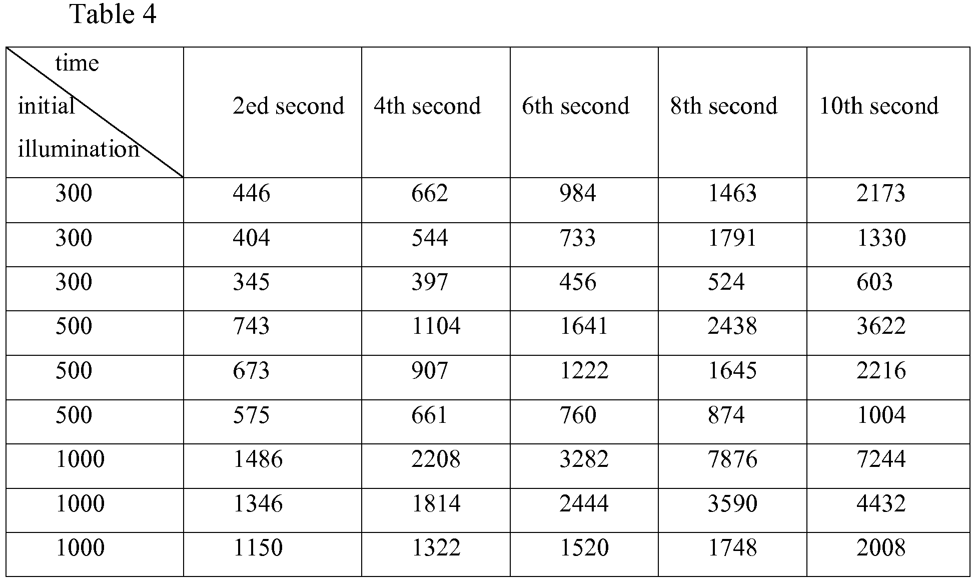

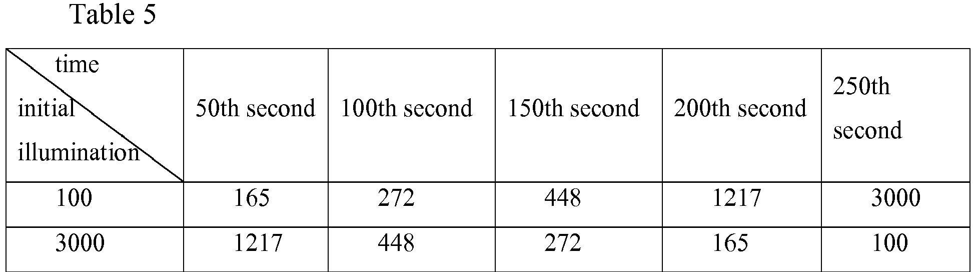

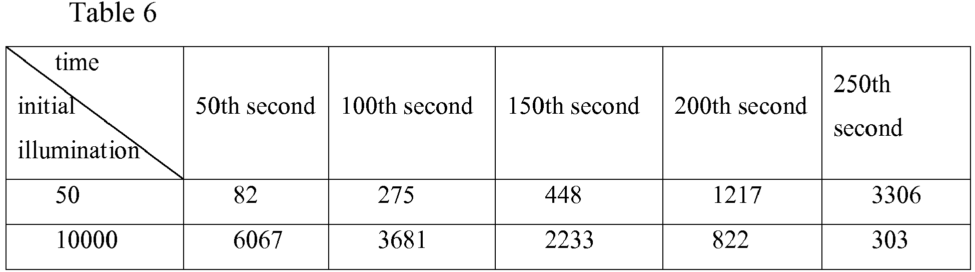

By experiment, the electrical parameters are determined and controlled according to the lighting parameter which is intended to obtain.

As shown in FIG.3, it is a block diagram of another kind of electrical components of the dynamic lighting apparatus, the apparatus includes a signal processing unit or a data processing unit (such as microcontroller unit, MCU), an input module, a communication interface module, multiple dynamic lighting part 1, 2,..., N (such as LED source 1, 2,..., N), and dynamic lighting-driving parts (such as LED driver 1, 2,..., N) respectively corresponding to the dynamic lighting parts, and further a power supply part. The power supply part (PW) provides power for other modules of the dynamic lighting apparatus, the dynamic lighting driving parts are used to drive the dynamic lighting parts which corresponds to them, the input module is used to receive the control command or the adjusting parameter command made by the user, the communication interface module is used to realize the wire or wireless data communication between the dynamic lighting apparatus and the outside, the dynamic lighting parts are used to change the lighting parameter with the drive of the corresponding dynamic lighting driving parts, and the change of the lighting parameter causes the eye structure of the user to be dynamically changed .

As shown in FIG.3, the input module, the signal processing unit or the data processing unit(such as MCU), the communication interface module, the dynamic lighting parts 1, 2, ... , N (such as LED sources 1, 2, ... , N), and the dynamic-lighting-driving-parts (such as LED drivers 1, 2,..., N) respectively corresponding to the dynamic lighting parts, are connected to the signal processing unit or the data processing unit (such as MCU). In some embodiments of the present invention, the number of the dynamic lighting parts is 3, 5, 6 or 10, etc., and 3 is preferred.

The working principle for the embodiment shown in FIG. 3 is as follows: the power supply part converts the voltage (such as 220V alternating current line voltage) input from the outside into the voltage of 5.3V and 3.3V, and output the voltage of 5V to supply the input module, the communication interface module, and the signal processing unit or the data processing unit (such as MCU), to enable them work normally. And the voltage of 3.3V is supplied to the dynamic lighting parts 1, 2,..., N (such as LED source 1, 2,..., N), and the dynamic lighting driving parts (such as LED drivers 1, 2,..., N), to enable them work normally. The input module receives the control command or the adjusting parameter command which is the user sent to the dynamic lighting apparatus (including its components), and transmits the received signals to the signal processing unit or the data processing unit (such as MCU). The communication interface module transmits the command and/or data from the outside of the dynamic lighting apparatus to the signal processing unit or the data processing unit (such as MCU), or conversely, transmits the operation parameters of the dynamic lighting apparatus and/or its internal components, or the command which is input to the signal processing unit or the data processing unit (such as MCU) by the input module, to the outside of the dynamic lighting apparatus. The signal processing unit or the data processing unit (such as MCU) controls the dynamic lighting-driving-parts 1, 2,..., N (such as LED drivers 1, 2,..., N) according to the command and/or data transmitted by the input module and/or the communication interface, and then change the driven signals (such as a voltage, a current, a pulse width, etc.) which is sent to the dynamic lighting parts 1, 2,..., N (such as LED source 1, 2,..., N) from the dynamic-lighting-driving-parts 1, 2,..., N (such as LED driver 1, 2,..., N), therefore each dynamic lighting part changes the lighting parameters according to that change, and further the change of the lighting parameters causes the eye structure of the user to be changed dynamically.

According to the respective embodiments with those electrical components shown in FIG.1, FIG.2, and FIG.3 , when the electrical parameters of the power is adjusted to be changed in a predetermined manner, so that during the procedure that each dynamic lighting part is enabled to change the lighting parameters according to that change, the electrical parameters of the power may optionally be at least one of the voltage, the current, and the frequency, etc., or the lighting parameters are continuously changed by PWM. The lighting parameters may be adjusted manually during the procedure of dynamic lighting, so as to meet the requirements of the basic lighting parameters by different users.

With reference to FIG. 4, the circuit of the multiple power supply parts (PW) will be described in detail. The input of each power supply part (PW) is connected to 220V alternating current, then, generates and outputs a voltage or a current to the dynamic lighting parts 1, 2,..., or N thereof. The means for the power supply part (PW) generating the voltage or the current is based on the electrical parameters of the power, and with the control of the change frequency of the lighting. Specifically, the power supply part (PW) includes two parts connected in series, and the two parts are an electric converting unit and a signal conditioning unit. The following will describe them separately.

The electric converting unit includes a rectifier filter module and a constant current and stable voltage module. The rectifier filter module converts the 24V alternating current voltage inverted from the grid voltage into a ripple voltage, and converts the ripple voltage into a smooth voltage. The constant current and stable voltage module converts the voltage output from the rectifier filter module, which is unstable because of the fluctuation in the grid voltage, into a relatively stable voltage, and outputs a constant current to the dynamic lighting parts 1, 2,..., N.

As shown in FIG.4, an end a and an end c of the bridge rectifier diode are connected to the two ends of the grid voltage, and a filter capacitor C1 is connected between the end b and the end d of the bridge rectifier diode. And a filter capacitor C1 is connected between pin land pin 5 of LM2576-ADJ type switching regulator TC, pin 4 of the LM2576-ADJ type switching regulator TC is connected to pin 2 of LM358 type operational amplifier IC via a resistor R2, and is also connected to pin 1 of LM358 type operational amplifier IC, and a freewheeling diode D5 is connected between pin 5 and pin 4 of the LM2576-ADJ type switching regulator TC, and the pin 5 is grounded.

The input 24V alternating current voltage has a certain fluctuation range because the grid voltage is sometimes unstable, which causes the voltage output from the rectifier filter module unstable. To obtain a relatively stable voltage, the LM2576-ADJ type switching regulator with adjustable voltages is used, which converts unstable input voltage into stable one. The input voltage of the LM2576-ADJ type switching regulator ranges from 8 to 40V, and we know from tests, when the input voltage is 13V and the circuit is used to drive the dynamic lighting parts 1, 2,..., N of 3W, the current through the dynamic lighting parts 1, 2,..., N which are loaded and the voltage across them are constant. While as the voltage 40V has reached the limit of LM2576-ADJ, a apparatus is vulnerable to be damaged in case that the operation condition changes slightly at limit edge. Therefore the present invention provides that in the case that the input voltage is permitted to fluctuate in the range of 13V ∼ 38V, the dynamic lighting parts 1, 2,..., N work normally , and solves the problem of the stabilization of the voltage which drives the dynamic lighting part 1, 2,..., N to work.

As shown in FIG.4, the pin 3 of the LM358 type operational amplifier IC is connected to the pin 2 of the LM358 type operational amplifier IC in turn via a resistor R1, a filter capacitor C2, and an inductor L1. A resistor R3 is connected between the pin 2 and the pin 4 of the LM358 type operational amplifier IC, a pin 8 thereof is connected to the positive electrode of the capacitor C2.

The voltage output from the pin 2 of the LM2576-ADJ switching regulator is divided by the dynamic lighting parts 1, 2,..., N and the resistor R1 which are loaded. When the voltage reach a certain value ,The permitted power consumed by the resistor R1 is limited and the voltage divided by the resistor R1 is relatively small, due to that, the two ends of the dynamic lighting parts 1, 2,..., N will have to subject to a large voltage and then the current through the dynamic lighting parts 1, 2,..., N will be large. Therefore , a feedback loop consisting of LM358 type operational amplifier IC, the resistor R2 and the resistor R1, is used to limit the current as a constant value, and then, a stable input current is supplied for the dynamic lighting parts 1, 2,..., N. It ensures normal and stable functioning of the dynamic lighting parts 1, 2,..., N and the structure of which is simple and has significant availability.

According to preferred embodiments of the present invention, the frequency of the light produced by the lighting units is 1000-3000Hz, and human is sensitive to the light with the frequency in that range. The light with the frequency in that change has a relaxing effect on the user's eyes during the lighting time, as the users are studying.

According to other embodiments of the present invention, at least one lighting unit is configured in each dynamic lighting part separately. According to an embodiment of the present invention, these lighting units are LED beads and/or LED bars and/or other types of LED. In some other embodiments of the present invention, these lighting units may also be other types of light sources other than LED, such as tungsten lamp beads, OLED, etc. In an embodiment of the present invention, the beads on dynamic lighting parts are disposed on at least one planar surface of the dynamic lighting part, in multiple rows and a staggered pattern. The lighting units can be disposed in various ways without being limited to this, for example, the lighting units may be disposed on at least one three-dimensional curved surface of the dynamic lighting parts, according to some other embodiments of this present invention.

According to other preferred embodiments of the present invention, one of the dynamic lighting parts 1, 2,..., N corresponds to one or more combinations of lighting units disposed in any way. The following is schematic but not limited description, for example, each dynamic lighting parts 1, 2,..., N corresponds to one row of lighting units separately, or, each dynamic lighting parts 1, 2,..., N respectively correspond to one or more lighting units disposed in the previous row and the adjacent row.

For each dynamic lighting part, the center line of the lighting direction of one lighting unit may be configured to be a certain angle to that of the other lighting unit. According to some other embodiments of the present invention, if at least one of the dynamic lighting parts has two angled surfaces, when lighting units are disposed on such dynamic lighting parts, the light emitting directions of the lighting units on the two surfaces will be different.

According to some embodiments of the present invention, these lighting units continuously change lighting parameters according to at least one of the following parameters: lighting model parameters, a change frequency of the lighting, electrical parameters of the power. The electrical parameters of the power are not applied to the lighting units directly, but indirectly applied to the lighting units via the voltage or current produced by the supply part (PW).The change of the lighting model parameters may be realized by selecting the type and model of the lighting units and/or the voltage or the current acting on the lighting units. The change frequency of the lighting is configured via the change time stored in the storages S.

According to preferred embodiments of the present invention, the dynamic lighting apparatus 100 further includes a supporting part. The dynamic lighting parts 1, 2,..., and N are provided on the supporting part, and move along the direction which the supporting part extends and/or rotate around the supporting part, according to a predetermined lighting model parameter. Due to the movement and rotation, the light irradiated on the subject the users read by the dynamic lighting parts 1, 2,..., N, are superimposed , decreased, and/ or changed the angle on each other. the angle of light is changed by the shape and structure of the dynamic lighting parts of the lighting units, and the change of the lighting model parameters at different time, or with the change of the change frequency of the lighting. According to preferred embodiments of the invention, the speed of the above movement is less than 1mm/s, and the angular speed of the above rotation is less than 5°/s.

According to some embodiments of the present invention, the dynamic lighting apparatus 100 further includes a mechanical actuating part. The mechanical actuating part enables the dynamic lighting parts 1, 2,..., N, to move and/or rotate. The mechanical actuating part may be realized by a stepping motor.

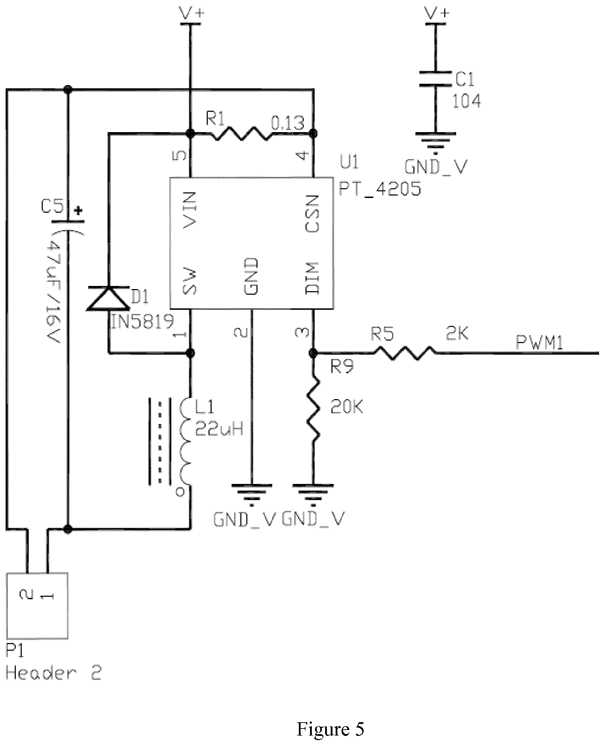

A specific example of the dynamic lighting part is given below to illustrate an implementation of the dynamic lighting part. It is to be clearly understood to those skilled in the art that the example is given by way of illustration only and not to otherwise limit the scope of the invention. FIGs 5-14 show circuit connection diagrams of multiplexed LED as embodiments of the dynamic lighting parts.

As shown in FIG.5, a LED driving circuit uses PT_4205 chip as a core driving chip, PWM signals pass through resistors R5 and R9 which are connected in series, and are grounded. And the voltage signals of the PWM signals at the resistor R9 are input to the DIM pin of the PT 4205 chip, the CSN pin and SW pin of the PT 4205 chip separately output signals for the pin 2 and pin 1 connected to the interface P1. The interface P1 is used to connect with one-plexed LED to be a dynamic lighting part.

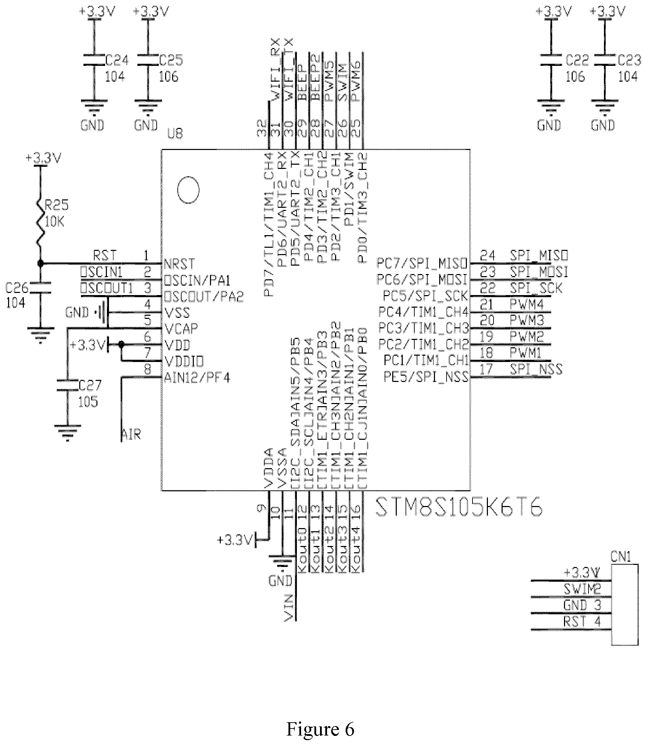

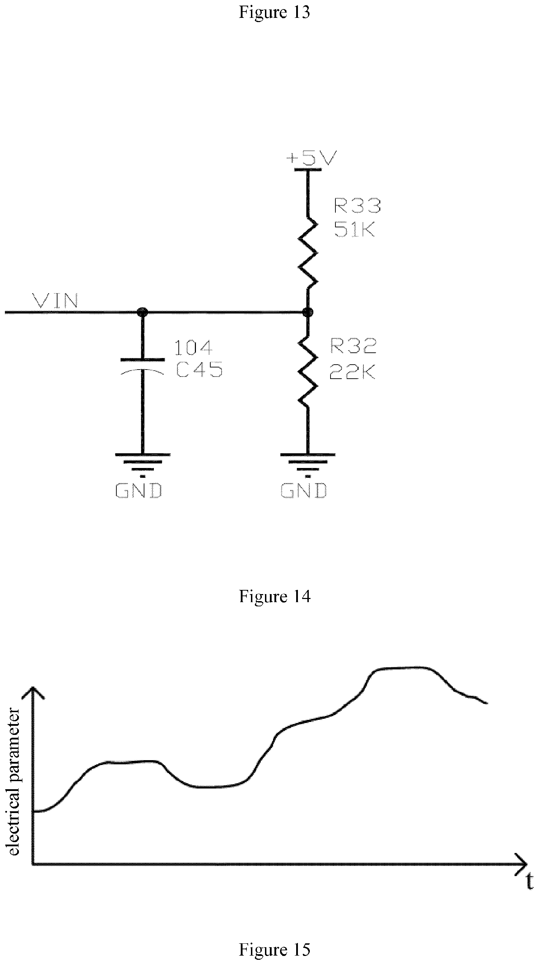

As shown in FIG.6, the controlling circuit employs a STM8S105K6T6 processor, PWM1to PWM6 are configured to output the PWM signals to the LED driving circuit shown in FIG.5. and the voltage output from the STM8S105K6T6 processor is detected by the input voltage detecting circuit shown in FIG.14

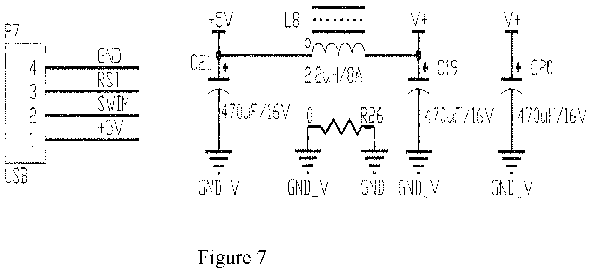

In the embodiment, a USB current limiting circuit shown in FIG.7 is implemented as a power supply converting circuit. The current is limited by SY6280AAC, so that the output current from the USB interfaces is adapted to the operating requirement of the electric components of the dynamic lighting apparatus in the embodiment.

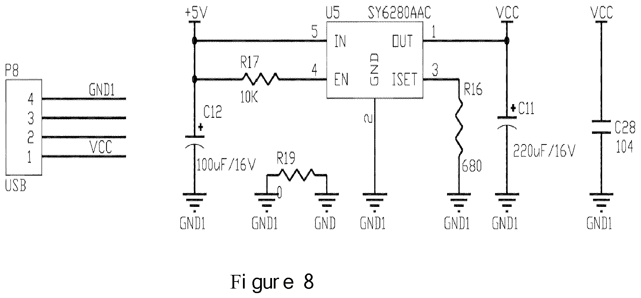

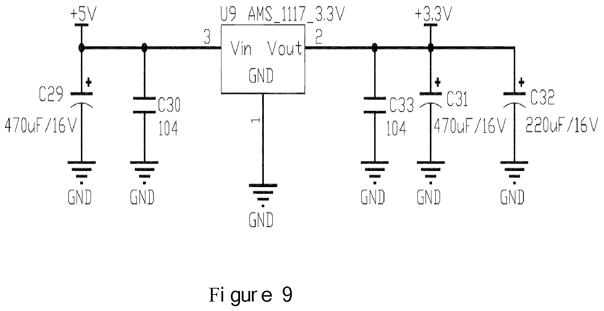

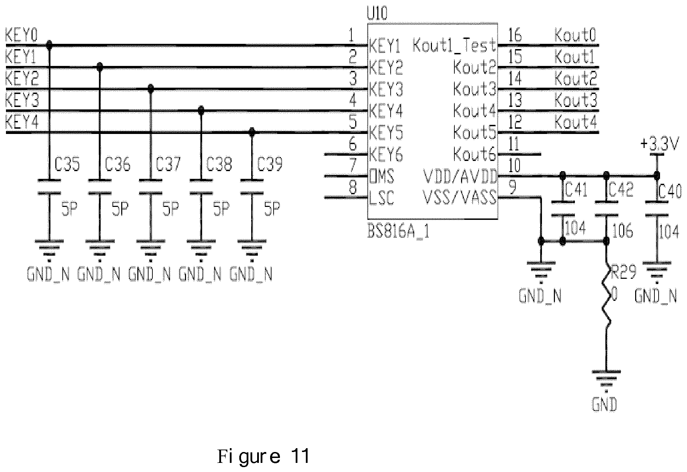

FIG.8 shows a power supply circuit of the dynamic lighting apparatus of one embodiment. It provides signal pretreatments, such as filtering, ripple removing, etc., for the input 5V voltage from USB, to obtain high quality and stable signal of 5V for other circuits of the dynamic lighting apparatus, and produce and supply high quality and stable voltage of 3.3V. The 5V voltage output from USB shown in FIG.7 is converted into 3.3V voltage by AMS_117 in the voltage converting circuit shown in FIG.11. The voltage converting circuit shown in FIG.9 and the power supply circuit shown in FIG.8 cooperatively supply the operating voltage for the electric components of the dynamic lighting apparatus in the embodiment.

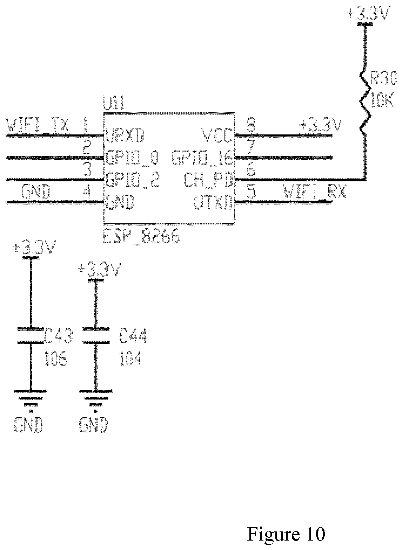

FIG.10 shows the circuit of the network interface used to receive signals, which transmitted to the dynamic lighting apparatus from the outside through WiFi, according to the embodiment.

FIG.11 shows the circuit of the touch keys which corresponds to turning on, turning off, adjusting the illumination of the dynamic lighting apparatus, and other functions. The touch key signals corresponding to the above functions are respectively collected by multiplexed capacitance sensor ,and output by BS816A_1 touch chip.

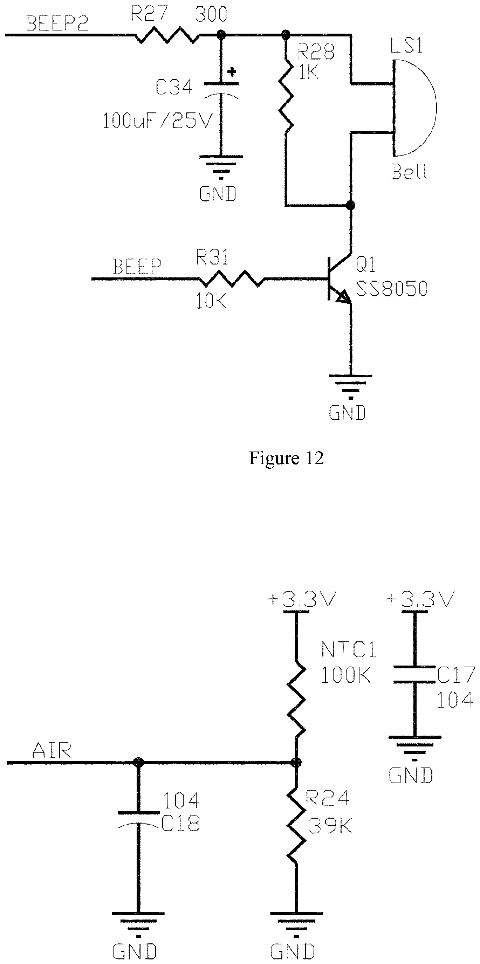

The chord output circuit shown in FIG.12 produce a chord sound, according to the output signals of the processor shown in FIG.8, to remind the user that the corresponding function is triggered or a certain or some states have been reached.

NTC1 shown in FIG.13 is employed as a temperature probe to collect environment temperatures in order that the dynamic lighting apparatus in the embodiment can give a temperature prompt according to its environment temperature, and/or for providing adjustment feedback references of the illumination or other aspects for the dynamic lighting apparatus.

An illustrated example waveform diagram of the electrical parameters changing with time is shown in FIG.15 according to the method of the present invention. of course, It should understand that the waveform diagrams of the electrical parameters changing with time, which conforms to the concept of the invention, is not limited to such diagram.

The electrical parameters may also be changed by configuring its change rate which is determined according to the change rate of the lighting parameters.

During dynamic lighting procedure, the lighting parameters may be adjusted manually to cause the current lighting to become bright or dimmed for meeting lighting requirements for different users.

The present invention may also realize the technical effect by configuring the change rate of the lighting parameters.

The present invention may protect the lighting apparatus using the disclosed lighting method, for example, the dynamic lighting method of the present invention can be applied to table lamps or household lighting lamps.

In the second technical solution, the dynamic lighting method of the present invention configures one or more electrical parameter changing time period and one or more electrical parameter non-changing time period during the procedure of lighting, and it includes the following steps:
Step1: a power output electrical parameter and a power output ending electrical parameter are available in each electrical parameter changing period, wherein electrical parameters output by a power supply part changes from the starting electrical parameter to the ending electrical parameter. A starting point electrical parameter and an ending point electrical parameter within an electrical parameter changing time period is respectively equal to electrical parameters within an electrical parameter non-changing time period which is before and after the electrical parameter changing time period. And,
Step2: enabling a dynamic lighting part to change lighting parameters during the electrical parameter changing time period according to step1, such that the change of the lighting parameters causes the eye structure of the user be dynamically changed.

The change of the lighting parameters caused by that of the electrical parameters in the electrical parameter changing time period will not have a negative effect on visual sense, which the user will notice the change and then will interfere normal use.

According to some embodiments of the invention, enabling each dynamic lighting part to change lighting parameters includes: during the electrical parameter changing time period, the lighting parameters of each dynamic lighting part will be changed, thereby it will further result in more changes of the eye structure of the user and more training is obtained. Moreover, the change results in the situation where large change or fluctuation of lighting parameters appears between different electrical parameter changing time periods is greatly reduced, therefore it is beneficial for users in the lighting environment without subjective awareness of the change of lighting parameters. More advantageously, the present invention can provide more detailed structural change for the eyes of the user, therefore it becomes possible to make appropriate and desired fine tuning on the eye structure of the user.

According to some embodiments of the invention, the method further includes the step of storing the information characterizing the changing manner for the electrical parameters, and/or the step for configuring and counting the change frequency of electrical parameters.

The structure of the dynamic lighting apparatus including the power supply part and the dynamic lighting part is same as that of the above embodiment, please refer to descriptions in FIG. 1 to FIG. 14 for details, which will not be described again herein, the difference is that the power supply output includes one or more electrical parameter changing time period and one or more electrical parameter non-changing time period during lighting time.

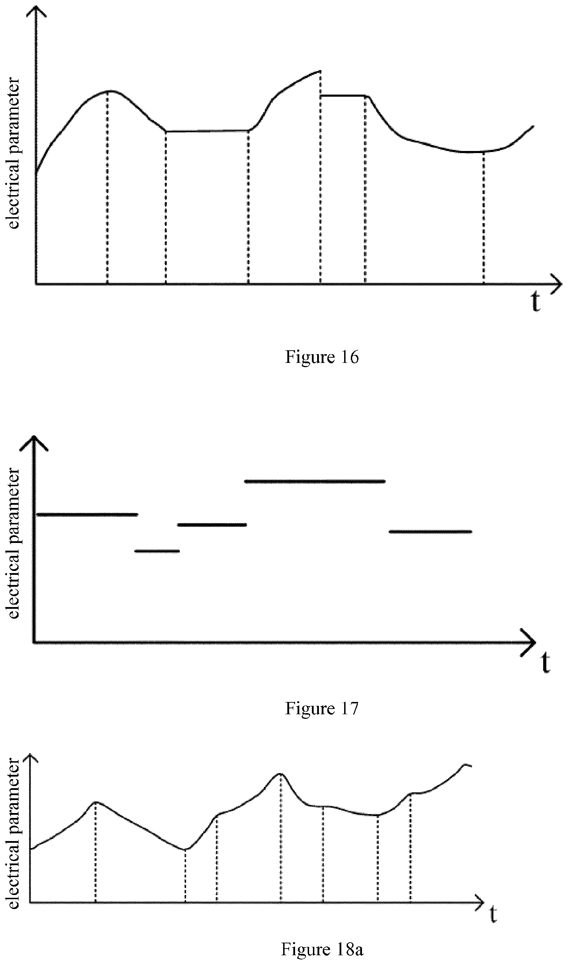

Therefor an example waveform diagram of the electrical parameters changing with time is shown in figure 16, of course, it should understand that the waveform diagrams of the electrical parameters changing with time that conforms to the invention is not limited to such diagram.

The electrical parameter may also be changed by configuring its change rate which is determined according to the change rate of the lighting parameters.

The method of present invention may be applied to a single lighting part.

The method of the present invention may also be applied to multiple lighting parts, and each lighting part may achieve the effect of the present invention.

The method of the present invention may be implemented by turning on and off one or more lighting parts of the multiple lighting parts.

During dynamic lighting procedure, the lighting parameters may be adjusted manually to cause the current lighting become bright or dimmed for meeting lighting requirements from different users.

The present invention may protect the lighting apparatus using the disclosed lighting method for example, the dynamic lighting method of the present invention can be applied to table lamps or household lighting lamps.

In the third technical solution, there are multiple electrical parameter configuring time periods during the procedure of lighting in the dynamic lighting method of the present invention, for example, there are C electrical parameter changing time periods during the procedure of lighting, 'C' is a number equal to or greater than 2, and the method includes the following steps:
Step1: different electrical parameters outputted by the power supply part are configured in two adjacent electrical parameter configuring time periods respectively. And,
Step2: enabling a dynamic lighting part to change lighting parameters according to the electrical parameters of the step1, such that the change of the lighting parameters causes the eye structure of the user to be dynamically changed.

The change of the lighting parameters caused by that of the electrical parameters in the adjacent electrical parameter configuring time periods will not have a negative effect on visual sense, which will interfere normal use.

According to some embodiments of the invention, enabling each dynamic lighting part to change lighting parameters includes: during the electrical parameter changing time period, the lighting parameters of each dynamic lighting part will be changed, thereby it will further result in more changes of the eye structure of the user and more training is obtained. Moreover, the change results in the situation where large change or fluctuation of lighting parameters appears between different electrical parameter changing time periods is greatly reduced, therefore it is beneficial for users in the lighting environment without subjective awareness of the change of lighting parameters. More advantageously, the invention can provide more detailed structural change for the eyes of the user, therefore it becomes possible to make appropriate and desired fine tuning on the eye structure of the user.

According to some embodiments of the invention, the method further includes the step for storing the information characterizing the changing manner for the electrical parameters, and/or the step for configuring and counting the change frequency of electrical parameters.

The structure of the dynamic lighting apparatus including the power supply part and the dynamic lighting part is same as that of the above embodiment, please refer to descriptions in FIG. 1 to FIG. 14 for details, which will not be described again herein, but compared with the previous two solutions, the electrical parameters are configured differently and changes differently. The emphasis of the description will be put on that difference.

With reference to FIG. 2, According to some embodiments of the present invention, the method further includes one or more lighting units are configured in each dynamic lighting part. At this time, that each dynamic lighting part changes the lighting parameters according to the lighting model parameters and/or the electrical parameters of the power furtherly includes that the lighting unit of each dynamic lighting part changes the lighting parameters according to the lighting model parameters and/or the electrical parameters of the power. The principle and manner of the change are same as those of each dynamic lighting part changing the lighting parameters according to the lighting model parameters and/or the electrical parameters of the power, which are described above.

The electrical parameters of the power outputted by power supply part (PW) of the present invention changes in a predetermined manner. The predetermined manner could be a preset data table stored in a power supply part (PW) or other parts. The data table includes multiple groups of electrical parameters. In some embodiments, these electrical parameters can be generated by being written to a storage S before the shipment. In other embodiments, the dynamic lighting apparatus has external interfaces for generating or rewriting these electrical parameters, which can be generated or rewritten through external interfaces (e.g. a USB interface, a network interface, etc., not shown) of the dynamic lighting apparatus. These electrical parameters include, but are not limited to, the voltage and/or current. For brevity, the present invention will describe the parameter of the voltage, the circuit structure of the power supply part is shown in Fig. 4., and its detailed description will be described later. This kind of power supply manner eliminates the disadvantages that stroboscopic phenomenon usually appears when using LED for lighting, thereby it provides electrical protection for the quality of the light entering the eye.

When the voltage outputted by power supply part (PW) is changed by a predetermined manner, voltage parameters outputted to each dynamic lighting part 1, 2,..., N will be changed. The voltage is used as a lighting voltage of the dynamic lighting part 1, 2,..., N. As the lighting voltage changes, the lighting parameters of dynamic lighting part 1, 2,..., N will be changed accordingly. Being Different from the conventional technology in which conditioning signals is performed utilizing digital signal technology, and the lighting voltage is produced by an analog fashion preferably in this present invention. The lighting voltage provided for the dynamic lighting parts 1 ,2 ,... ,N will change smoothly in a time domain. Thus the lighting parameters of the light emitted by the dynamic lighting parts 1 , 2 , ... , N will change continuously.

According to other embodiments of the present invention, the lighting units are configured in each dynamic lighting part. According to preferred embodiments of the present invention, these lighting units are LED beads and/or LED bars and/or other types of LED. In some other disclosed embodiments, these lighting units may be other types of light sources other than LED, such as tungsten lamp beads, organic light-emitting diodes (OLED), etc.

The illumination of each dynamic lighting part may reach a maximum value of 10000 lux at a certain time, and may reach a minimum value of 300 lux at another time, or may reach any interval range from 300 lux to 10000 lux, while the illumination varies between 3000 K-6000 K or any interval range from this scope.

For different ambient brightness B, the minimum brightness difference D Bmin/B which is perceptible to a human eye is the same and it equals a constant. In other words, an increment D S in the brightness sensation of a human eye is not proportional to the increment D B in objective brightness D B, but is proportional to the relative increment D B/B in brightness. According to Weber-Fechner Law, the subjective brightness sensation is linearly-related to the logarithm of the objective brightness. *ξ* = D Bmin/B is called contrast sensitivity threshold or Weber - Fecner Ratio. Usually *ξ* = 0.005∼0.02, *ξ* increases to 0.05 when the brightness is very high or very low. And for different people, their contrast sensitivity threshold is different. For example, their contrast sensitivity threshold is about 0.01 for adolescents aged 6-18 years. Based on this, the change rate of the lighting parameters between adjacent electrical parameter change time periods is kept within or equal to 0.02 in this present invention, to ensure that the change of the lighting parameters is not noticeable perceptible to a human eye and will not interfere with normal work and study, but the change of the lighting parameters will cause the iris of the user's eye to adjust the pupil size automatically under the precondition that the user is unconscious of that, thus the luminous flux will be controlled. In such way, the iris moves with the continuously change of the lighting light. The movement of the iris will lead to that of the ciliary muscle, the movement of the ciliary muscle will lead to that of the lens, and then will result in the so-called 'three linkage of eye optometry system' in the visual field, and it will achieve the goal of exercising the user's eye

The electrical parameter configuring time periods are preferably between 0.1 second to 5 minutes in this present invention.

The following will describe some non-limiting examples.

### Example 1

The time length of the first electrical parameter configuring time period is configured to be 0.1 second, and the value of the illumination is 3000 in that time period. The time length of the second electrical parameter configuring time period, which is adjacent to the first electrical parameter configuring time period, is configured to be 5 seconds, and the value of the illumination is 3055 in the second electrical parameter configuring time period. The time length of the third electrical parameter configuring time period, which is adjacent to the second electrical parameter configuring time period, is configured to be 2 seconds, and the value of the illumination is 3100 in the third electrical parameter configuring time period. The time length of the fourth electrical parameter configuring time period, which is adjacent to the third electrical parameter time period, is configured to be 5 minutes, and the value of the illumination is 3040 in the fourth electrical parameter configuring time period.

### Example 2

The time length of the first electrical parameter configuring time period is configured to be 10 seconds, and the value of the illumination is 300 in that period. The time length of the second electrical parameter configuring time period, which is adjacent to the first electrical parameter time period, is configured to be 60 seconds, and the value of the illumination is 305 in the second electrical parameter configuring time period. The time length of the third electrical parameter configuring time period, which is adjacent to the second electrical parameter configuring time period, is configured to be 300 seconds, and the value of the illumination is 310 in the third electrical parameter time period. The time length of the fourth electrical parameter configuring time period, which is adjacent to the third electrical parameter configuring time period, is configured to be 180 seconds, and the value of the illumination is 305 in the fourth electrical parameter configuring time period.

### Example 3

The time length of the first electrical parameter configuring time period is configured to be 5 seconds, and the value of the illumination is 10000 in that period. The time length of the second electrical parameter configuring time period, which is adjacent to the first electrical parameter time period, is configured to be 60 seconds, and the value of the illumination is 9800 in the second electrical parameter configuring time period. The time length of the third electrical parameter configuring time period, which is adjacent to the second electrical parameter configuring time period, is configured to be 300 seconds, and the value of the illumination is 9750 in the third electrical parameter time period. The time length of the fourth electrical parameter configuring time period, which is adjacent to the third electrical parameter configuring time period, is configured to be 180 seconds, and the value of the illumination is 9650 in the fourth electrical parameter configuring time period.

### Example 4

The time length of every electrical parameter configuring time period is configured to be 0.1 second, the value of the illumination is 300 in the first electrical parameter configuring time period, the value of the illumination in the second electrical parameter configuring time period adjacent to the first electrical parameter configuring time period is configured to be 305, the value of the illumination in the third electrical parameter configuring time period adjacent to the second electrical parameter configuring time period is configured to be 310, the value of the illumination in the fourth electrical parameter configuring time period adjacent to the third electrical parameter configuring time period is configured to be 315,---- until the value of the illumination in a certain electrical parameter configuring time period is arrived at 600 or more, that is, twice or more times of the initial illumination.

The electrical parameters which controls the lighting parameters is determined according to the lighting parameters which is intended to obtain.

Based on the method of the present invention, an exemplary waveform diagram of the electrical parameter changing with time is shown in FIG.17, of course, it should understand that the waveform diagrams of the electrical parameter changing with time, which conforms to the concept of the invention, is not limited to the diagram.

During the procedure of dynamic lighting, the lighting parameters may be adjusted manually to cause the current lighting to become bright or dimmed for meeting lighting requirements from different users.

The present invention may also protect the lighting apparatus using the disclosed lighting method, for example, the disclosed dynamic lighting method can be applied to table lamps or household lighting lamps.

In the fourth technical solution, there are multiple electrical parameter configuring time periods during the lighting in the dynamic lighting method of the invention, for example, there are C electrical parameter changing time periods during the lighting, 'C' is a number equal to or greater than 2, and the dynamic lighting method includes the following steps:
Step1: a power output starting electrical parameter and a power output ending electrical parameter are available in each electrical parameter changing time period, wherein electrical parameters output by a power supply part changes with a same trend from the power output starting electrical parameter to the power output ending electrical parameter, and the electrical parameters change with a same trend or a different trend between adjacent electrical parameter changing time periods.
Step2: enabling a dynamic lighting part to change lighting parameters according to step1, the change of the lighting parameters in each electrical parameter changing time period causes the eye structure of the user to be dynamically changed.

The change of the lighting parameters caused by that of the electrical parameters in the electrical parameter changing time period will not have a negative effect on visual sense, which the user will notice the change and then will interfere normal use.

According to some embodiments of the invention, enabling each dynamic lighting part to change lighting parameters includes: during the electrical parameter changing time period, the lighting parameters of each dynamic lighting part will be changed, thereby it will further result in more changes of the eye structure of the user and more training is obtained. Moreover, the change results in the situation where large change or fluctuation of lighting parameters appears between different electrical parameter changing time periods is greatly reduced, therefore it is beneficial for users in the lighting environment without subjective awareness of the change of lighting parameters. More advantageously, the invention can provide more detailed structural change for the eyes of the user, therefore it becomes possible to make appropriate and desired fine tuning on the eye structure of the user.

According to some embodiments of the invention, the method further includes the step for storing the information characterizing the changing manner for the electrical parameters, and/or the step for configuring and counting the change frequency of electrical parameters.

The structure of the dynamic lighting apparatus including the power supply part and the dynamic lighting part is same as that of the above embodiment, please refer to descriptions in FIG. 1 to FIG. 14 for details, which will not be described again herein, the difference is that the electrical parameters outputted by the power supply part within the adjacent electrical parameters changing time period changes continuously with a same trend or a different trend during the lighting.

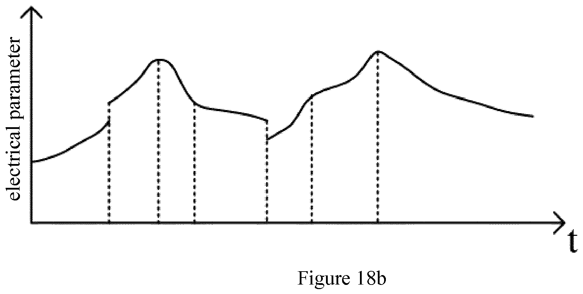

An example waveform diagram of the electrical parameter changing with time is as shown in FIG. 18a or FIG. 18b, of course, it should understand that the waveform diagrams of the electrical parameter changing with time, which conforms to the concept of the invention, is not limited to the diagram.

The electrical parameters may also be changed by configuring its change rate which is determined according to the change rate of the lighting parameters.

The method of present invention may be applied to a single lighting part.

The method of the present invention may also be applied to multiple lighting parts, and each lighting part can achieve the effect of the invention.

The method of the present invention may be implemented by turning on and off one or more lighting parts of the multiple lighting parts.

During the procedure of dynamic lighting, the lighting parameters may be adjusted manually to cause the current lighting to become bright or dimmed for meeting lighting requirements from different users.

The present invention may protect the lighting apparatus using the disclosed lighting method, for example, the disclosed dynamic lighting method can be applied to table lamps or household lighting lamps.

A person skilled in the art should be further understood that the units and algorithm steps of each example described in connection with the embodiments disclosed herein can be implemented in electronic hardware, computer software or a combination of both, in order to clearly illustrate the alternative of hardware and software, the composition and steps of the examples have been generally described in terms of functions in the above description. Whether these functions are performed in hardware or software depends on the specific application and design constraints of technical solutions. A person skilled in the art can use different methods for implementing the described functions for each particular application, but such implementation should not be considered to be beyond the scope of the present invention.

The steps of the method or algorithm described in connection with the embodiments disclosed herein can be implemented in hardware, a software module executed by a processor, or a combination of both. The software module can be placed in random access memory (RAM), memory, read only memory (ROM), electrically programmable ROM, electrically erasable programmable ROM, registers, hard disk, removable disk, CD-ROM, or any other form of storage medium known in the art.

Above mentioned specific embodiments further describe aims, technical solutions and beneficial effects of the invention in detail, it should be understood that the above mentioned is merely specific embodiment of the present invention without limiting a protection scope of the present invention, and any modifications, equivalent substitutions, improvement, etc. made within the spirit and principle of the present invention should be included in the scope of the present invention.

## Claims

1. A dynamic lighting method, wherein one or more electrical parameter changing time period is configured during lighting, and the method comprises:
Step1: a power output starting electrical parameter and a power output ending electrical parameter are available in each electrical parameter changing time period, wherein electrical parameters output by a power supply part change with a same trend from the power output starting electrical parameter to the power output ending electrical parameter, and a starting point electrical parameter and an ending point electrical parameter within an electrical parameter changing time period is respectively equal to the electrical parameters output by a power supply part in an electrical parameter non-changing time period which is before and after the electrical parameter changing time period,
Step2: enabling a dynamic lighting part to change lighting parameters during the electrical parameter changing time period according to step1, such that the change of the lighting parameters causes the eye structure of a user to be dynamically changed.

2. The method of claim 1, wherein a time length of each electrical parameter changing time period is equal to or different from each other.

3. The method of claim 1, wherein the electrical parameters include a current and/or a voltage.

4. The method of claim 1, wherein the lighting parameter is an illumination.

5. The method of claim 4, wherein the value of the illumination is between 100 lux and 10000 lux.

6. The method of claim 5, wherein a change rate of the lighting parameters of the illumination in the electrical parameter changing time period ranges from 0.0001 to 0.02 in every 0.1 second.

7. The method of claim 5, wherein a change rate of the illumination in the electrical parameter changing time period is larger than or equal to 2.

8. The method of claim 1, wherein the lighting parameters are adjusted manually during dynamic lighting.

9. A dynamic lighting method, wherein multiple electrical parameter changing time periods and one or more electrical parameter non-changing period are configured during lighting, and the method comprises:
Step1: a power output starting electrical parameter and a power output ending electrical parameter are available in each electrical parameter changing time period, electrical parameters output by a power supply part changes with a same trend from the power output starting electrical parameter to the power output ending electrical parameter, and the electrical parameters changes with a same trend or different trend between adjacent electrical parameter changing time periods,
Step2: enabling a dynamic lighting part to change lighting parameters s according to step1, such that the change of the lighting parameters in each electrical parameter changing time period causes the eye structure of a user to be dynamically changed.

10. The method of claim 9, wherein a time length of each electrical parameter changing time period is equal to or different from each other.

11. The method of claim 9, wherein the electrical parameters include a current and/or a voltage.

12. The method of claim 9, wherein the lighting parameter is an illumination.

13. The method of claim 12, wherein a value of the illumination is between 100 lux and 10000 lux.

14. The method of claim 13, wherein a change rate of the lighting parameter of the illumination in the electrical parameter changing time period ranges from 0.0001 to 0.02 in every 0.1 second.

15. The method of claim 13, wherein a change rate of the illumination in the electrical parameter changing time period is larger than or equal to 2.

16. The method of claim 9, wherein the lighting parameters are adjusted manually during dynamic lighting.

17. A dynamic lighting method, wherein multiple electrical parameter configuring time periods are configured during lighting, and the method comprises:
Step1: different electrical parameters output by a power supply part are respectively configured in two adjacent electrical parameter configuring time periods,
Step2: enabling a dynamic lighting part to change lighting parameters dynamically according to the electrical parameters of step1, such that the change of the lighting parameters causes the eye structure of a user to be dynamically changed.

18. The method of claim 17, wherein a time length of each electrical parameter configuring time period is equal to or different from each other.

19. The method of claim 17, wherein the electrical parameters include a current and/or a voltage.

20. The method of claim 17, wherein the lighting parameter is an illumination.
The method of claim 4, wherein a value of the illumination is between 100 lux and 10000 lux.

21. The method of claim 20, wherein a change rate of the illumination between the adjacent electrical parameter configuring time periods is ranged within 0.02.

22. The dynamic lighting method of claim 17, wherein the lighting parameters are adjusted manually during dynamic lighting.

23. A dynamic lighting method, wherein multiple electrical parameter changing time periods are configured during lighting, and the method comprises:
Step1: a power output starting electrical parameter and a power output ending electrical parameter are available in each electrical parameter changing time period, electrical parameters output by a power supply part change with a same trend from the power output starting electrical parameter to the power output ending electrical parameter, and the electrical parameters change with a same trend or a different trend between adjacent electrical parameter changing time periods,
Step2: enabling a dynamic lighting part to change lighting parameters according to step1, such that the change of the lighting parameters in each electrical parameter changing time period causes the eye structure of a user to be dynamically changed

24. The method of claim 23, wherein a time length of each electrical parameter changing time period is equal to or different from each other.

25. The method of claim 23, wherein the electrical parameters include a current and/or a voltage.

26. The method of claim 23, wherein the lighting parameter is an illumination.

27. The method of claim 26, wherein a value of the illumination is between 100 lux and 10000 lux.

28. The method of claim 27, wherein a change rate of the lighting parameter of the illumination in the electrical parameter changing time period ranges from 0.0001 to 0.02 in every 0.1 second.

29. The method of claim 27, wherein a change rate of the illumination in the electrical parameter changing time period is larger than or equal to 2.

30. The method of claim 23, wherein the lighting parameters are adjusted manually during dynamic lighting.

31. A dynamic lighting apparatus, wherein the dynamic lighting apparatus performs lighting via any dynamic lighting method of claim 1, claim 9, claim 17 or claim 23.

## Amended claims

### Amended claims under Art. 19.1 PCT

1. A dynamic lighting method, wherein one or more electrical parameter changing time period is configured during lighting, and the method comprises:
Step1: a power output starting electrical parameter and a power output ending electrical parameter are available in each electrical parameter changing time period, wherein electrical parameters output by a power supply part change with a same trend from the power output starting electrical parameter to the power output ending electrical parameter, and a starting point electrical parameter and an ending point electrical parameter within an electrical parameter changing time period is respectively equal to the electrical parameters output by a power supply part in an electrical parameter non-changing time period which is before and after the electrical parameter changing time period,
Step2: enabling a dynamic lighting part to change lighting parameters during the electrical parameter changing time period according to step1, such that the change of the lighting parameters causes the eye structure of a user to be dynamically changed,
wherein the lighting parameter is an illumination; a change rate of the lighting parameters of the illumination in the electrical parameter changing time period ranges from 0.0001 to 0.02 in every 0.1 second, and a change rate of the illumination in the electrical parameter changing time period is larger than or equal to 2.

2. The method of claim 1, wherein a time length of each electrical parameter changing time period is equal to or different from each other.

3. The method of claim 1, wherein the electrical parameters include a current and/or a voltage.

4. The method of claim 1, wherein the value of the illumination is between 100 lux and 10000 lux.

5. The method of claim 1, wherein the lighting parameters are adjusted manually during dynamic lighting.

6. A dynamic lighting method, wherein multiple electrical parameter changing time periods and one or more electrical parameter non-changing period are configured during lighting, and the method comprises:
Step1: a power supply output starting electrical parameter and a power supply output ending electrical parameter are available in each electrical parameter changing time period, electrical parameters output by a power supply part changes with a same trend from the power supply output starting electrical parameter to the power supply output ending electrical parameter, and the electrical parameters changes with a same trend or different trend between adjacent electrical parameter changing time periods,
Step2: enabling a dynamic lighting part to change lighting parameters s according to step1, such that the change of the lighting parameters in each electrical parameter changing time period causes the eye structure of a user to be dynamically changed.
wherein the lighting parameter is an illumination, a change rate of the lighting parameter of the illumination in the electrical parameter changing time period ranges from 0.0001 to 0.02 in every 0.1 second, and a change rate of the illumination in the electrical parameter changing time period is larger than or equal to 2.

7. The method of claim 6, wherein a time length of each electrical parameter changing time period is equal to or different from each other.

8. The method of claim 6, wherein the electrical parameters include a current and/or a voltage.

9. The method of claim 6, wherein a value of the illumination is between 100 lux and 10000 lux.

10. The method of claim 6, wherein the lighting parameters are adjusted manually during dynamic lighting.

11. A dynamic lighting method, wherein multiple electrical parameter configuring time periods are configured during lighting, and the method comprises:
Step1: different electrical parameters output by a power supply part are respectively configured in two adjacent electrical parameter configuring time periods,
Step2: enabling a dynamic lighting part to change lighting parameters dynamically according to the electrical parameters of step1, such that the change of the lighting parameters causes the eye structure of a user to be dynamically changed,
wherein the lighting parameter is an illumination; a change rate of the illumination between the adjacent electrical parameter configuring time periods is ranged within 0.02.

12. The method of claim 11, wherein a time length of each electrical parameter configuring time period is equal to or different from each other.

13. The method of claim 11, wherein the electrical parameters include a current and/or a voltage.

14. The method of claim 11, wherein a value of the illumination is between 100 lux and 10000 lux.

15. The dynamic lighting method of claim 11, wherein the lighting parameters are adjusted manually during dynamic lighting.

16. A dynamic lighting method, wherein multiple electrical parameter changing time periods are configured during lighting, and the method comprises:
Step1: a power supply output starting electrical parameter and a power supply output ending electrical parameter are available in each electrical parameter changing time period, electrical parameters output by a power supply part change with a same trend from the power supply output starting electrical parameter to the power supply output ending electrical parameter, and the electrical parameters change with a same trend or a different trend between adjacent electrical parameter changing time periods,
Step2: enabling a dynamic lighting part to change lighting parameters according to step1, such that the change of the lighting parameters in each electrical parameter changing time period causes the eye structure of a user to be dynamically changed,
wherein the lighting parameter is an illumination; a change rate of the lighting parameter of the illumination in the electrical parameter changing time period ranges from 0.0001 to 0.02 in every 0.1 second, and a change rate of the illumination in the electrical parameter changing time period is larger than or equal to 2.

17. The method of claim 16, wherein a time length of each electrical parameter changing time period is equal to or different from each other.

18. The method of claim 16, wherein the electrical parameters include a current and/or a voltage.

19. The method of claim 16, wherein a value of the illumination is between 100 lux and 10000 lux.

20. The method of claim 16, wherein the lighting parameters are adjusted manually during dynamic lighting.

21. A dynamic lighting device, wherein the dynamic lighting device performs lighting via any dynamic lighting method of claim 1, claim 6, claim 11 or claim 16.
